# EUROPEAN PATENT SPECIFICATION

(11) **EP 0 516 893 B1**
(45) Date of publication and mention of the grant of the patent: **24.07.1996**
(21) Application number: 91201362.0
(22) Date of filing: 04.06.1991
(51) Int. Cl.: A01F 12/18

(54) **Improved access to the threshing means of a combine harvester**
Zugang zur Dreschanlage eines Mähdreschers
Moyen d'accès au dispositif batteur d'une moissonneuse-batteuse

(43) Date of publication of application: 09.12.1992
(73) Proprietor: NEW HOLLAND BELGIUM N.V., B-8210 Zedelgem (BE)
(72) Inventor: Desnijder, Dirk J., B-9032 Wondelgem (BE); van Kerschaver, Fernand A.C., B-8730 Beernem (BE)
(74) Representative: Vandenbroucke, Alberic

(56) References cited:
- EP-B- 0 096 923
- DE-A- 1 906 427
- DE-B- 2 013 289
- FR-A- 2 216 900
- FR-A- 2 349 274
- US-A- 1 838 451
- US-A- 2 166 416
- US-A- 3 209 759

## Description

The present invention relates generally to crop harvesting machines, commonly referred to as combines, and, more particularly to the means for facilitating the accessibility to the threshing mechanism thereof.

A conventional combine harvester usually comprises a feeder housing which is operable to receive severed crop material from a front attachment and to transport said material rearwardly to a threshing and separating mechanism, which commonly takes the form of a rotary cylinder cooperating with a concave and behind which a rotary straw beater and shaking straw walkers are disposed. Wanted grain together with chaff material are separated through the threshing concave, fall onto a rearwardly extending grain pan and are transported further towards a rearwardly disposed cleaning mechanism including sieves and a fan which clean the separated grain from discardable particles.

When the threshing concave requires attention e.g. for cleaning purposes or a general inspection, some problems could be faced for reaching the concave area in a convenient manner. Some combine harvesters are provided with inspection covers at one or both lateral sides of the machine, but access towards the concave area from that position is rendered difficult not only by the location of drive belts and chains which extend along the combine sides but also by the presence of the front traction wheels which normally conceal a large part of the threshing area as seen from the side of the combine harvester. Moreover, large capacity combines normally have a threshing mechanism of a considerable transverse width, which anyhow would make it difficult to reach the middle portion of the threshing concave of such harvesters from a side position.

Gaining full access to the concave from the rear side of the machine is feasible but hardly recommendable as, to this end, the operator would have to crawl over the cleaning sieves and the rear part of the grain pan, what not only could damage those machine components but moreover could lead to personal injury. In any case, all necessary activity in the concave area would have to be carried out from a very uncomfortable position and in an unhealthy, mostly dusty environment. Considering the above, an operator will be reluctant to gain access to the threshing concave in such a manner.

There still remains the front side of the combine harvester from where the threshing concave could be reached. Indeed, in the transition area between the feeder housing and the threshing mechanism, a stone trap normally is provided behind which the threshing concave extends rearwardly. As has been proposed in EP-B-0.096.923, said stone trap is pivotally and detachably secured to the combine frame so that, after removal of the stone trap from its operative position, the threshing concave can be reached from underneath the feeder housing, which thereto has been moved to a fully raised position.

Although the foregoing arrangement provides an improved access to the threshing concave in comparison to the other arrangements, it nevertheless still suffers from the disadvantage that no immediate and readily accessible entrance is available as for each inspection of the concave the stone trap first has to be emptied and removed before access can be obtained. Moreover, once the stone trap removed, it is found that there is only a limited working space available between the threshing mechanism and the grain pan, hampering the operator to reach in with his head so that most of the servicing activities have to be performed by touch. This of course is not the easiest way to do the job and it certainly would be preferred to carry out the servicing on sight.

It is therefore the objective of the present invention to overcome the aforementioned drawbacks by providing an improved access capability to the threshing area of a combine harvester, which is readily accessible by the combine operator and provides a full view on the threshing mechanism.

According to the present invention a combine harvester is provided comprising threshing and separating means disposed at least in part in trough means arranged to receive threshed and separated crop material from the threshing and separating means and having a forwardly facing wall partly defined by a stone trap disposed in front of the threshing and separating means.

Said combine harvester is characterized in that part of said forwardly facing wall is further defined by inspection cover means enabling access to the threshing and separating means through said trough means.

Said trough is generally V-shaped and is formed by said forwardly facing wall and a rear transversely extending wall, which is formed by an apron conveyor for transporting separated crop material towards a cleaning mechanism. The front wall is positioned adjacent to the feeder housing of the combine which is operable to supply harvested crop material to the threshing mechanism and which has a discharge end proximate to the front upper end of the V-shaped trough.

The inspection cover means are formed either by a pivotable or by a removable door which extends the full width of the threshing mechanism. In alignment with and immediately above the pivotable, respectively removable door, a readily detachable stone trap is provided for further improving the accessibility through the front wall of said trough.

A combine harvester in accordance with the present invention will now be described in greater detail, by way of example, with reference to the accompanying drawings, in which :
Figure 1 is a schematic side elevational view, partially in section, of a combine harvester incorporating the present invention;
Figure 2 is a side elevational view, on a larger scale, of the rearward part of the elevator housing and the threshing and separating mechanism;
Figure 3 is a section on the line III-III of Figure 2;
Figure 4 is a side elevational view, on a larger scale, of a stone trap of the combine harvester;
Figure 5 shows the stone trap as seen in the direction of arrow F in Figure 4;
Figure 6 is a side elevational view, on a larger scale, of a grain collecting conveyor and the forward part of the cleaning mechanism of the combine harvester;
Figure 7 is a partial, curtailed section on the line VII-VII of Figure 6; and
Figure 8 is a side elevational view, on a larger scale, of an alternative stone trap arrangement.

In the following description, terms such as "forward", "rearward", "left", "right", etc. are used, which are words of convenience and which are not to be construed as limiting terms.

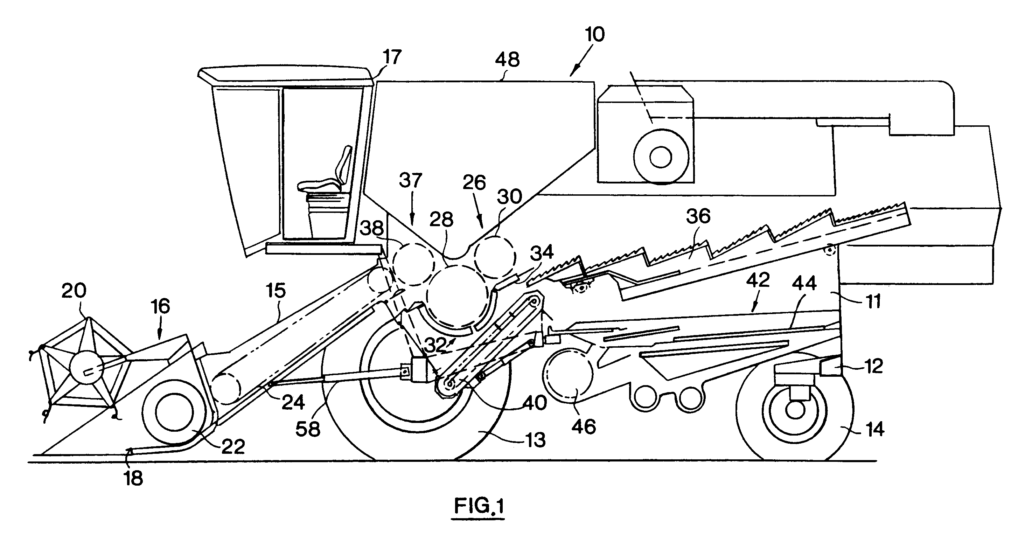

Referring now to the drawings and particularly to Figure 1, a schematic side elevational view, partially in cross section, of a crop harvesting machine 10, commonly referred to as a self-propelled combine harvester, can be seen.

The combine base unit 11 comprises a wheeled frame or housing 12 mobilely supported on a front pair of traction wheels 13 and a rear pair of steerable wheels 14 for movement over a field to harvest crop material. Pivotally mounted to the front of the base unit 11 is a feeder house 15 on the front of which is mounted a crop harvesting header 16 of conventional design.

In general, the header 16 includes a forwardly disposed reciprocating cutterbar 18 for severing crop material from the stubble. A reel 20 is disposed above and forwardly of the cutterbar 18 to sweep crop material thereover and transport it rearwardly to a consolidating auger 22 where it is converged centrally of the machine and then elevated by an elevator 24 of conventional construction in the feeder house 15 to threshing and separating means indicated generally at 26. Basically, the threshing and separating means 26 consist of a threshing cylinder 28 and a straw beater 30, provided respectively with cooperating concave means 32 and 34, and a set of longitudinally extending straw walkers 36. Inbetween the discharge end of the elevator 24 and the threshing cylinder 28, deflector means 37, comprising an additional rotor 38, are provided of which the function will be described furtheron.

Most of the grain is separated from the straw by the threshing cylinder 28 and associated concave means 32. Straw material issuing from the threshing means 28, 32 is subjected to the action of the straw beater 30 and passes therefrom to the straw walkers 36 which effect further separation of grain from the remainder of the crop material. Wanted grain together with chaff material which are separated through the concave means 32 and 34, fall onto a conveyor 40 and are transported towards a cleaning apparatus 42, which comprises sieve means 44 and a cleaning fan 46. The sieve means 44 are oscillated generally back-and-forth for moving the grain therealong while permitting the passage of cleaned grain by gravity therethrough. The grain on the sieve means 44 is subjected to a cleaning action by the fan 46 which serves to blow air through said sieve means 44 in order to remove the chaff and other impurities, such as dust , from the grain by making this material airborne for discharge from the machine. Clean grain is collected underneath the sieve means 44 from where it subsequently is transferred to a grain tank 48 on top of the combine base unit 11.

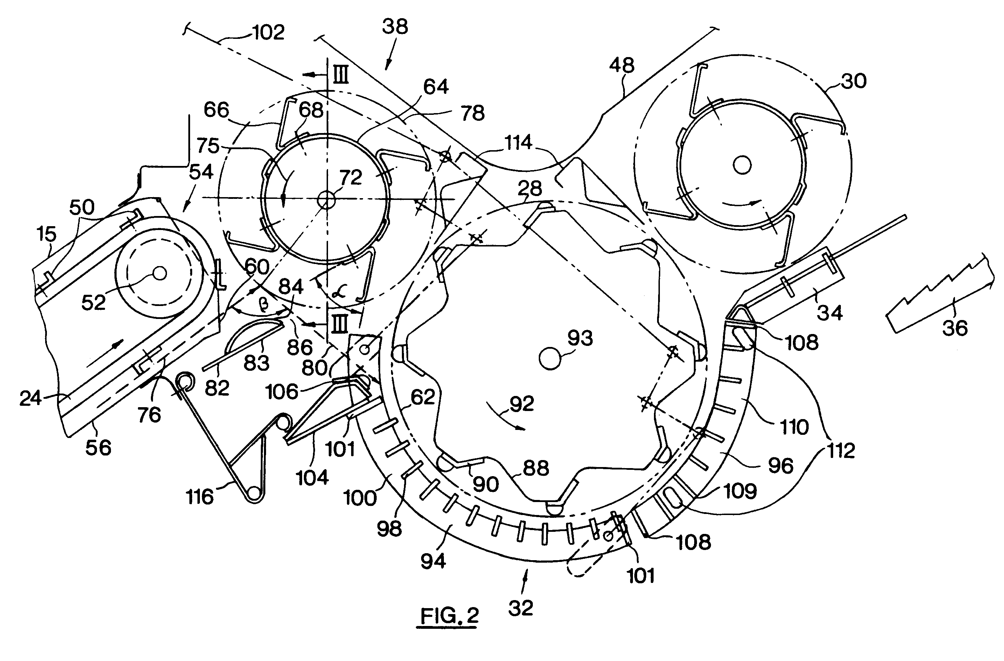

Turning now to figure 2, the configuration of the threshing and separating means 26 will be described in further detail. Typically, the elevator 24 in the feeder house 15 is in the form of an endless chain and slat apron conveyor comprising transverse slats 50. Generally, the apron conveyor 24 is driven by a drive shaft 52 positioned at the rearward end 54 of the feeder house 15, the sense of rotation being such that the conveyor 24 operates in an undershot manner, i.e. crop material engaged thereby is conveyed upwardly inbetween the underside of the apron conveyor 24 and a bottom plate 56 of the feeder house 15. The orientation of the feeder house 15 relative to the combine base unit 11 and hence the height of the header 16 relative to the ground is controlled by a pair of hydraulic lift cylinders 58 (shown in Figure 1) interconnecting the feeder house 15 and the base unit 11. By extending the cylinders 58 and pivoting the feeder house 15 about the drive shaft 52, the header 16 can be lifted from the ground.

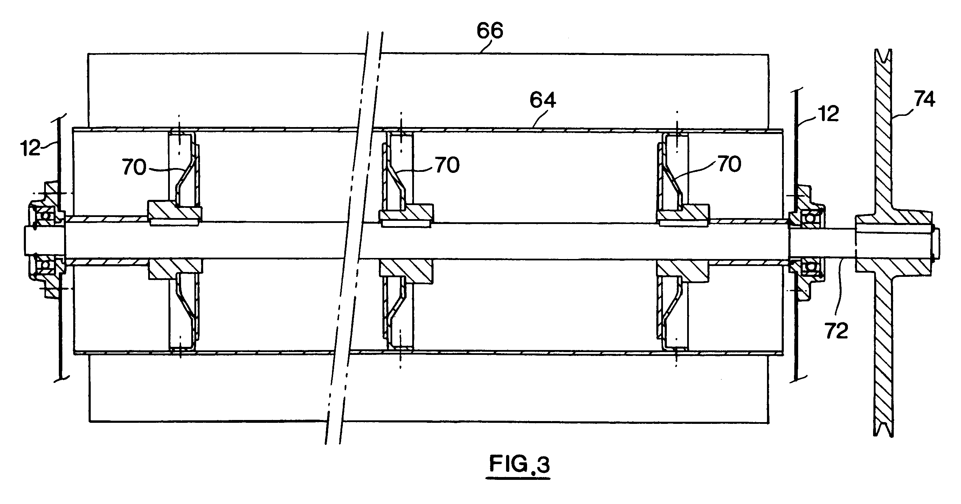

Crop material transported by the conveyor 24 travels through a crop discharge opening 60 at the rear end 54 of the feeder house 15 towards the rotor 38 already referred to. An important function of the rotor 38 is to act as a deflector beater for deflecting the layer of crop material issuing at the discharge opening 60 towards an inlet gap 62 between the threshing cylinder or drum 28 and the concave means 32 and located slightly below the horizontal plane through the centre of the drum 28. To this end, the deflector beater 38 has a tubular body 64 on which deflector plates 66 are mounted at equiangularly spaced intervals, the plates 66 extending the full length of the body 64 and being secured thereto by bolts 68. As can be observed in Figures 2 and 3, the tubular body 64 is formed by two half-cylindrical parts, each having a recessed portion at only one longitudinal side thereof for receiving the non-recessed side of the adjacent part and whereby both parts are bolted to flanges 70 provide at the inner side of the body 64. Preferably, weld nuts are secured to the inner side of both said parts receiving the bolts 68, thereby increasing serviceability of the deflector plates 66. The deflector beater 38 is drivingly connected to a shaft 72, extending centrally through the flanges 70 and rotatably supported by the side walls of the combine frame 12, at one side of which a pulley 74 is provided for driving the shaft 72 in a direction as indicated by arrow 75.

Said shaft 72 is disposed at an elevated level relative to the drive shaft 52 of the apron conveyor 24, resulting in a configuration in which the flow of crop material through the elevator discharge opening 60 (indicated by dashed arrow 76) impinges upon a lower quadrant of the deflector beater 38 in which the deflector plates 66 are rotating downwardly. Crop material intersecting the outline 78 generated by the rotating deflector plates 66 is deflected tangentially downwardly relative to said outline 78 as indicated by dashed arrow 80, straight into the inlet gap 62 mentioned above.

It will be appreciated that the apron conveyor 24 transports crop material upwardly in a dense layer since the transport area is confined by the bottom wall 56 on the one hand and the lower run of said conveyor 24 moving closely above the bottom wall 56 on the other hand. It has been found essential for the efficiency of the deflector beater 38 to present this layer of crop material to the beater 38 still in a dense, confined manner as, under such conditions, the beater 38 has the most effective impact on said layer. If, on the contrary, the layer of crop material would be allowed to expand freely in front of the beater 38, then the operation of the latter would be hampered in that the beater 38 would have to recompress the layer before transporting it further and hence energy would be lost.

Provisions therefore are taken to prevent expansion of the layer in the transition area between the crop discharge opening 60 and the impact area on the beater 38; provisions which include a detaining element 82, extending over the full width of said discharge opening 60 and being formed by a hollow-cored member having a flat portion 83 with a part-cylindrical portion 84 on top. The detaining element 82 is disposed such that the top portion 84 generally registers with the bottom wall 56 so that the layer of crop material leaving the feeder house 15 is prevented from expanding downwardly whereby the conveyor 24 otherwise would loose its positive control over the confined transport. The detaining element 82 further is disposed to extend towards the deflector beater 38, whereby a gap 86 is build of a width preferably equal to the distance measured between the slats 50 of the lower run of the conveyor 24 and the bottom plate 56, so as to preserve a constant thickness of the layer of crop material along its path around the beater 38.

The curvature of the top portion 84 of the detaining element 82 serves a threefold purpose. First of all, the front part of the top portion 84 ensures a smooth reception of crop material leaving the feeder house 15, even if the orientation of the latter is varied during operation. Secondly, the rearward part of the top portion 84 defines, in conjunction with the beater 38, the width of the discharge gap 86 and finally, the transitional part between the front and rearward parts helps to fluently divert the layer of crop material from its initial upwardly inclined direction 76 towards its downwardly inclined direction 80.

Layer expansion in an upward direction in the transitional area between the conveyor 24 and the beater 38 is substantially prevented by providing the beater 38 in the immediate vicinity of the outline generated by the conveyor slats 50, so that said transitional area is kept confined. At the same time , the beater 38 acts as a scraper element to reduce back-feeding of crop material over the conveyor 24.

The trajectory 80 of the crop towards the inlet gap 62 thus mainly is determined by the cooperating action of the deflector beater 38 on the one hand and the crop detaining element 82 on the other hand; the latter element 82 being fixedly secured to the combine frame 12 and hence having a fixed orientation relative to the deflector beater 38. Consequently, if the working orientation of the feeder house 15 relative to the combine frame 12 is altered e.g. due to providing larger or smaller sized tyres, the crop trajectory behind the deflector beater 38 is hardly influenced. This is of great importance to the threshing efficiency of the threshing drum 28 since it has been experienced that projecting the layer of crop material against the front face of a threshing drum 28 before it is entrained into the concave inlet pinch 62, is not as efficient what threshing capacity is concerned as projecting a dense layer of crop straight into said inlet pinch 62. In the latter case, the rubbing action of the threshing cylinder 28 on the crop is far better and that in essence determines the threshing efficiency.

Although the beater 38 is depicted in Figure 2 equipped with four deflector plates 66, it will be appreciated that the number of plates 66 may vary therefrom. Preferably however, this number is not reduced below four, in order to ensure a controlled grip of the plates 66 on the layer of crop material. The angle α of each plate 66 to the tangent of the body 64 is approximately 30°. Although this angle has been found suitable, it should be understood that other angles are possible and that also the shape of the deflector plates 66 may be varied substantially. As an example, the plates 66 may be wound spirally around the tubular body 64; each plate 66 comprising two oppositely wound flights which extend from the middle of the deflector beater 38 towards each respective end thereof. Such an arrangement could be advantageous for spreading the crop more evenly over the inlet 62 of the threshing cylinder 28 when the elevator 24 is unevenly loaded.

Rearwardly of the deflector beater 38, the threshing cylinder 28 is provided, which comprises flanges 88 and raspbars 90 mounted thereon. The threshing cylinder 28 is rotated in the direction of arrow 92 around axis 93, extending parallel to but at a lower level relative to as well the shaft 72 of the beater 38 as the drive shaft 52 of the apron conveyor 24. The threshing cylinder 28 partially is positioned underneath the deflector beater 38 for, on the one hand, reducing the distance between the discharge end 54 of the feeder house 15 and the threshing inlet 62, and, on the other hand, enlarging the available space inbetween the feeder house 15 and the threshing cylinder 28 in order to create the possibility to mount a deflector beater 38 with a considerable diameter, so as to optimize the impact thereof on the transported layer of crop.

As such, a configuration is obtained whereby the inlet gap 62 at the forward portion of the conveyor means 32 is located vertically underneath the rearward part of the deflector beater 38 and whereby the enclosed angle between the line connecting shaft 52 and 72 on the one hand, and the line connecting shaft 72 and axis 93 on the other hand, is in the range of 100° to 140°. Extrapolating the foregoing to the path followed by the layer of crop material, an enclosed angle β between arrow 76 and 80 is found in the range of 80° to 120°.

The concave means 32, extending around the threshing cylinder 28 over an angle of approximately 180°, is composed of two individual concave portions : a leading concave 94 at the inlet of the concave means 32 and a trailing concave 96 at the outlet thereof. The leading concave 94 comprises transverse threshing bars 98 mounted edge-on in a frame with arcuate side members 100 and front and rear transverse bars 101. To complete the concave, thereby forming a grid structure, curved slats and wires (not shown) are provided parallel to the side members 100. Although large quantities of grain are already separated through the leading concave 94, the main function thereof nevertheless consists in threshing the harvested crop material, as can be seen from the aggressive positioning of the threshing bars 98 which extend beyond the curved upper surface of the side members 100.

The leading concave 94 is adjustable relative to the threshing cylinder 28 for adjusting the clearance therebetween to suit the type of harvested crop and the crop condition; a clearance which may vary from a few millimetres for harvesting small seeds to about 40 mm for harvesting corn. To this end, the concave 94 is adjustably supported at its forward and rearward end and is adjustable by actuation of a rod and bell crank arrangement generally indicated by the chain line 102, either manually operated from the operators cab 17 or by a remote controlled electric actuator (not shown).

Rigidly attached to the front transverse bar 101 of the concave 94 is a transition beam 104 with an angled upper surface of which one side slants downwardly towards the inlet gap 62 in order to constitute a guiding surface for the crop material which is projected from the deflector beater 38. Under certain operating conditions, e.g. when harvesting " tough " crops which are difficult to thresh, it has been found advantageous to install an additional rasp bar 106 on the upper surface of the beam 104 with the rasps thereof facing in the direction of the threshing cylinder 28 in a manner such that the rotating rasp bars 90 of the latter cooperate with the stationary rasp bar 106 to already effect a fierce threshing action before the crop reaches the threshing concave 94. The transition beam 104 is shaped to directly receive the additional rasp bar 106 and orient it correctly without the need of any connecting joints. The rasps on said rasp bar 106 not necessarily extend parallel to the fore-and-aft axis of the combine harvester, but may diverge from the middle towards the respective sides thereof to, on the one hand, improve the threshing effect and, on the other hand, induce a spreading effect on the layer of crop material.

Turning again to the concave means 32, it is seen that the leading concave 94 envelops the threshing cylinder 28 over an arc of approximately 100° which is a commonly used dimension for a threshing concave. However, as already indicated, the threshing cylinder 28 is provided with a further concave 96 which closely adheres to and extends from the leading concave 94 over a further arc of approximately 80°. Said concave 96 comprises front and rear transverse bars 108, transverse slats 109 and arcuate side members 110 with curved slats and wires (not shown) inbetween. In this respect, both concaves 94 and 96 look rather similar. There are however some important differences in that first of all the transverse slats 109 do not extend beyond the curved, upper surface defined by the arcuate side members 110 and therefore are not aggressive on the layer of crop passing thereover. Furthermore, the circumferential distance measured between adjacent transverse slats 109 on the one hand and the transversely measured distance between adjacent fore-and-aft extending wires on the other hand are twice as large as the corresponding distances measured on the leading concave 94. It thus will be appreciated that, although some threshing activity still is experienced between the cylinder 28 and the concave 96, the latter in essence acts as a separating grid for separating the wanted grain from the straw material.

As seen in cross section, the trailing concave 96 has a front portion concentrically positioned relative to the cylinder 28, while a rearward portion at the outlet of said concave 96 flares radially outwardly relative thereto in order to attenuate the transition with the concave 34 underneath the straw beater 30. By this token, excessive straw breakage resulting from angular turns is avoided. As best can be seen in Figure 2, said outlet of the concave 96 is located slightly above the horizontal plane through the axis 93 of the drum 28.

During operation, the position of the trailing concave 96 relative to the cylinder 28 is fixed. A clearance between both elements of about 20 mm has been found to be suitable for most crop conditions. The setting of the trailing concave 96 is not as critical as the setting of the leading concave 94 as a result of the different functions that they have to perform ( separating vs. threshing ). Pre-adjustment of said clearance nevertheless is made feasible however by providing elongated slots 112 in the side walls of the frame 12 through which bolts are extended for fixing the concave 96 in any desired position. In conditions where the clearance of the leading concave (94) should be larger than the preset clearance of the trailing concave (96), said leading concave (94) may be adjusted askew relative to the threshing cylinder (28) whereby the clearance inbetween diminishes from the inlet gap (62) towards the outlet of said concave (94). The clearance at said outlet preferably is taken identical to the clearance of the trailing concave (96) so as to obtain a soft transition between both concaves (94 and 96).

The position of the threshing cylinder 28 relative to respectively the deflector beater 38 and the straw beater 30 has been chosen such that the outlines generated by said rotating elements closely approach one another. As a consequence, the deflector beater 38 is combed off at its rearward side by the cylinder 28 while the straw beater 30 in turn does the same on the backside of the cylinder 28. This configuration aims to avoid backfeeding and wrapping of straw material around the rotary structures. In addition thereto, rigid scraper plates 114 have been provided above the cylinder 28 to further improve the foregoing action. The diameter of the deflector beater 38 is about the two thirds of the diameter of the threshing drum 28, so that the latter is able to comb off a rather substantial area of the former.

Crop material issuing from the threshing cylinder 28 is guided by the straw beater 30 over the concave 34 towards the straw walkers 36, meanwhile further separating grain from the straw material. In order to reduce costs of parts and accessaries, the straw beater 30 may be constructed partially or even completely identical to the deflector beater 38.

The rotary elements of the threshing and separating mechanism 26 are all either directly or indirectly driven from a common main drive shaft (not shown) of the combine harvester 10, which rotates at about 1000 RPM under full load of the combine harvester engine. All said rotary elements are coupled in pairs in the following sequence. A first drive, extending from the main drive shaft to the straw beater 30, comprises a variator mechanism so that the drive speed of the straw beater 30 may be varied from 480 RPM to 1425 RPM. The straw beater 30 in turn drives the threshing cylinder 28 in a range from 420 RPM to 1250 RPM. Still further, the deflector beater 38 is driven from the threshing cylinder 28 at a speed varying from 140 RPM to 420 RPM. For harvesting certain types of vulnerable crops, e.g. soybeans, an additional speed reducer is operatively interconnected between the main drive shaft and the beater 30 so that the drive speed of all the rotors in front thereof are reduced by half. The drive shaft 52 of the straw elevator 24 is directly coupled to the main drive shaft and as such is driven at a fixed speed of 390 RPM.

Expressing the foregoing RPM 's in circumferential speed, this means that the conveyor slats 50 are moving at 2.7 m/s, and when disregarding the additional speed reducer, the deflector beater 38 and the threshing cylinder have a circumferential speed varying respectively from 3 to 9 m/s and from 13 to 40 m/s. It consequently will be observed that the circumferential speeds are increased from the elevator 24 over the deflector beater 28 towards the threshing cylinder 28, thereby improving on the one hand the transporting capacity of the arrangement and on the other hand the threshing efficiency of the threshing cylinder 28. It indeed has been experienced that increasing the speed of the layer of crop material fed into the gap 62 between the threshing drum 28 and the concave 94 has also a favourable effect on threshing efficiency.

Since the deflector beater 38 is drivingly dependent from the threshing cylinder 28, any variation of the drive speed of the latter automatically results in a corresponding change in speed of the former, gearing the operation for one another under all conditions.

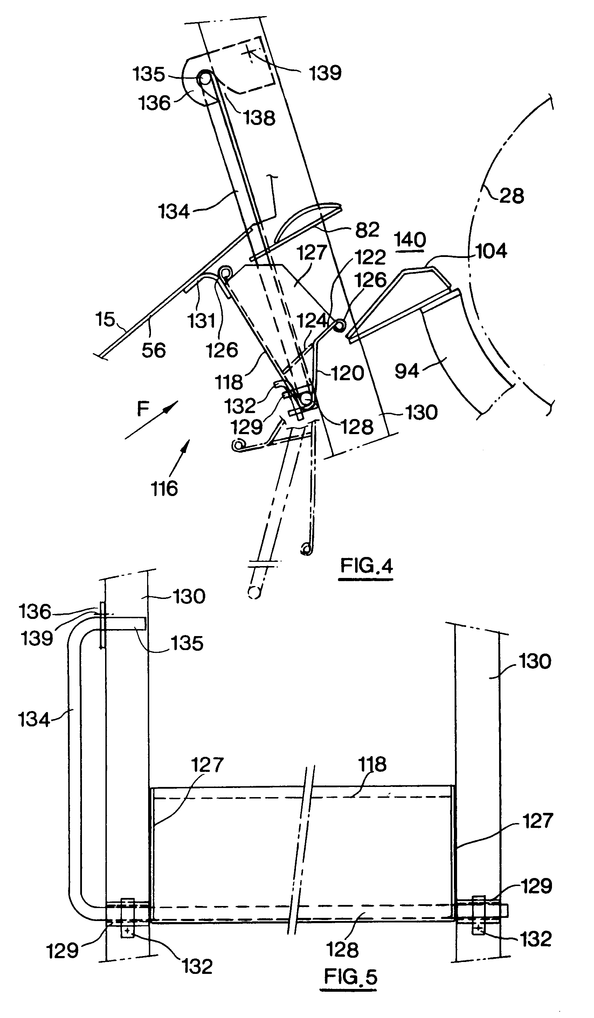

Viewing now the transition area between the deflector beater 38 and the threshing cylinder 28, a stone trap 116 is provided to collect and store stones and other hard foreign objects which accidentally are picked-up by the header 16 and fed rearwardly to the threshing and separating mechanism 26. Referring particularly to Figures 4 and 5, the stone trap 116 comprises a transversely extending shaped plate having a downwardly inclined front face 118, an almost vertical portion 120 and a rearwardly and upwardly inclined portion 122. In alignment with the portion 122 and extending towards the front, a bridging plate 124 is provided. The front plate 118, together with the plate 124 and the rearward portion 122, define a V-shaped trough in which the foreign objects are collected. The bent edges on the front plate 118 and the rearward portion 122 are intended to give greater strength to the structure. To complete the trough, meanwhile adding further rigidity thereto, side walls 127 are provided at the transverse opposite ends thereof. The front plate 118 carries a flexible sealing strip 131 which shoulders against the bottom plate 56 of the feeder house 15 in whatever position thereof.

The stone trap 116 is pivotable as a unitary structure around a transverse pivot axis at the inner side of the bent between the front plate 118 and the portion 120. Shaft means 128, either comprising stub shafts (not shown) at each side of the stone trap 116 or a single elongate rod 128, as depicted in Figure 4, are coincident with said pivot axis and are pivotally supported by two U-shaped brackets 129 attached to the front frame members 130. Keys 132 are inserted through aligned apertures in the limbs of the brackets 129 to hold the shaft 128 in place. The shaft or rod 128 is welded or otherwise secured at the bottom end of the front plate 118 across the transverse width thereof.

The stone trap 116 can be moved between a stone-collecting position and a stone-dumping position, respectively shown in full and dashed lines in Figure 4, by means of a handle 134 at the right hand side of the combine harvester 10. Said handle 134 may be attached to any part of the stone trap 116, but preferably is formed by an elongate extension of the rod 128, extending at a right angle relative thereto. The top portion 135 of the handle 134 is bent inwardly, parallel to the front face of the right hand side frame member 130, in order to form an abutment for the handle 134 when the stone trap 116 is closed. A latch member 136 with an open-ended curved slot 138 is pivotally attached at 139 to the frame member 130 for retaining the stone trap 116 in its stone-collecting position.

Foreign objects, entering the threshing mechanism, are hit by the threshing bars 90 of the threshing cylinder 28 and are thereby thrown through the stone trap inlet 140 which is defined at the top side by the flat portion 83 of the detaining element 82, extending towards the bent edge 126 of the front plate 118, and at the bottom side by the angled portion of the transition beam 104, against which the bent edge 126 of the plate 122 rests. The inlet 140 thereby constitutes a true extension to the trough of the stone trap 116 so that the stone-catching volume is more than doubled.

The stone trap 116 can easily be emptied by unlatching the latch member 136 and manually pulling the handle 134 forwardly to thereby pivot the stone trap 116 to its stone-dumping position. In an alternative embodiment (not shown), an electric or hydraulic actuator may be connected to the handle 134, enabling the combine operator to pivot the stone trap 116 back and forth between its open and closed positions without leaving the cab. In such an arrangement, the latch member 136 would not be required.

It will be appreciated from the foregoing that crop material conveyed towards the threshing cylinder 28 has to cross a transversely extending open space which is formed by the stone trap inlet 140. Accordingly, once the crop material has been impelled and released by the deflector beater 38 through the gap 86 with the detaining element 82, it is freely flowing across said inlet 140 towards the threshing cylinder 28, without being guided by a rigid wall element.

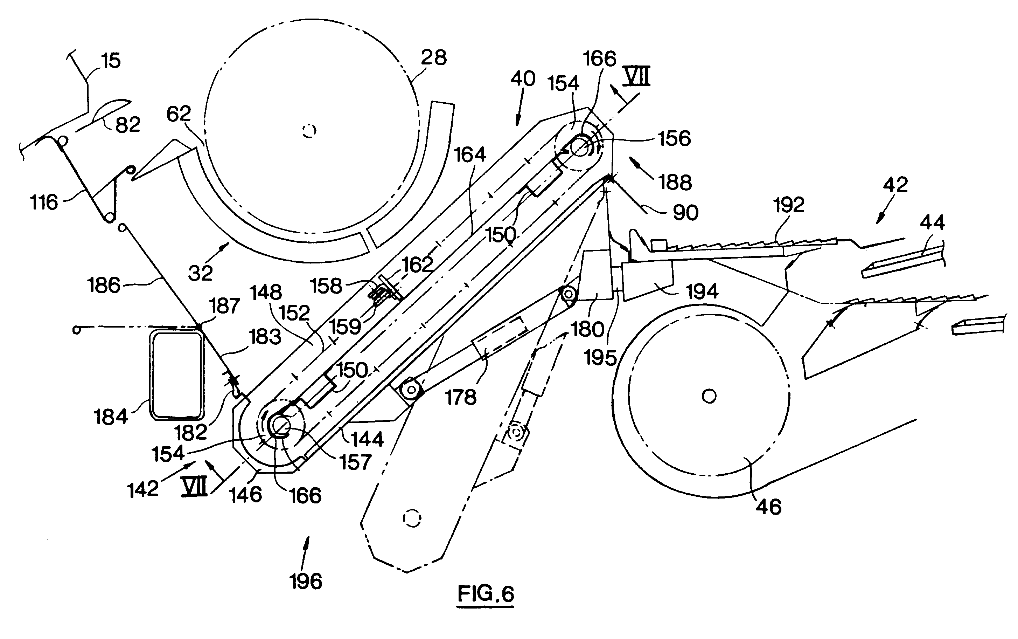

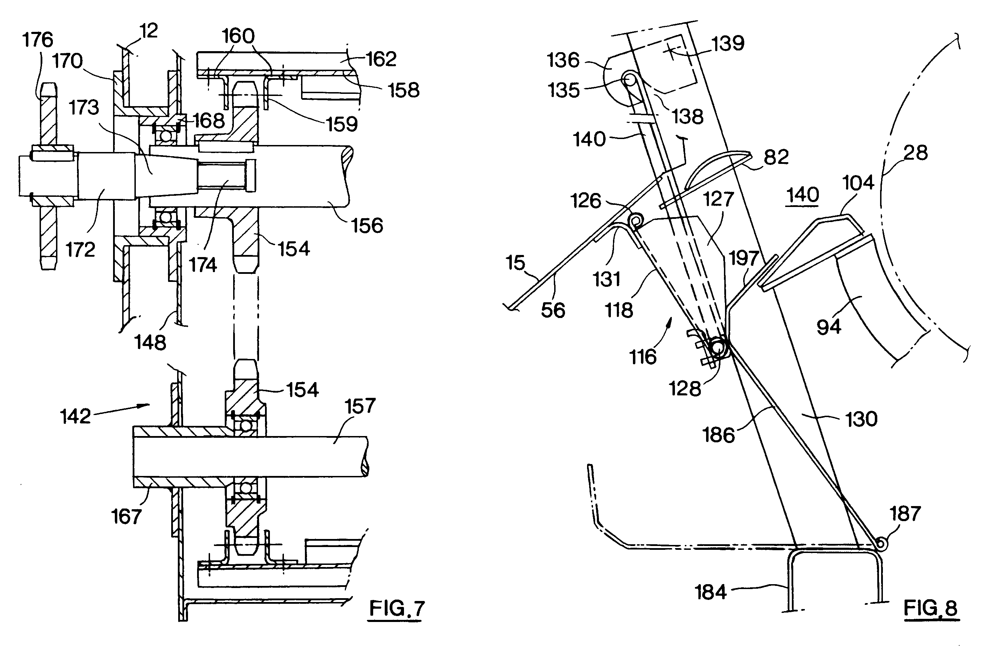

Grain and chaff material separated through the concaves of the threshing and separating mechanism 26 are collected and transported rearwardly by the conveyor 40 already referred to and which is shown in Figures 6 and 7 in more details. The conveyor 40 is housed in a self-supporting frame or housing 142 comprising a bottom wall 144, a semicircular front wall 146 and side walls 148 which are interconnected by a pair of transversely extending reinforcement beams 150. The conveyor 40, in the form of an endless chain and slat apron conveyor, comprises two transversely spaced chains 152, each thereof being provided proximate to a respective side wall 148 and respectively being extended over a pair of sprockets 154 supported by transversely oriented, spaced apart shafts 156 and 157. At equidistant spacings along the length of each chain 152, transversely extending, angled slats 158 are attached to links 159 furnished with a supporting surface 160. The front face of each slat 158 is fitted with a flexible strip 162 operable to engage the grain and chaff material .

The conveyor 40 is driven in a clockwise direction as seen in Figure 1, or otherwise said, the conveyor 40 is of the so called "overshot" type which means that the crop is conveyed at the upper side thereof. To this end, a drag board 164, spanning the total width of the conveyor 40 and covering the shafts 156 and 157 with bent end portions 166, is rigidly attached to the beams 150 in order to form a stationary, upwardly and rearwardly inclined floor over which the crop is urged by the impelling action of the strips 162. Said end portions 166 prevent contact between the transported crop material and the shafts 156, 157 in order to keep the latter clean even under adverse harvesting conditions, whereby the grain and chaff material may be mixed with wet and sticky particles of soil and seeds of weed. It has been experienced that under such harvesting conditions, also the drag board 164 is not prone of contamination as the flexible strips 162 sweep the upper surface thereof while transporting the crop.

The distance between successive strips 162 on the one hand and the height of these strips 162 on the other hand have been chosen in relation to as well the fore-and-aft inclination of the conveyor 40 (which is approximately 45°) as the drive speed thereof for optimizing the transport capacity of the arrangement under various operating conditions.

The shaft 157 at the lower, receiving end of the conveyor 40, does not rotate during operation and is fixedly supported by brackets 167, slidably attached to the side walls 148 by intermediary of a conventional tensioning mechanism (not shown) for taking up eventual stretch of the chains 152. As the shaft 157 is stationary, the corresponding sprockets 154 are rotatably carried thereon. Contrary thereto, the upper shaft 156 at the discharge end of the conveyor 40 imparts rotation to the latter and therefore the corresponding sprockets are fixedly connected thereto. Brackets 168, rotatably supporting the shaft 156, are incorporated in the side walls 148 of the conveyor housing 142 and, in turn, are held by further brackets 170 united with opposite side members of the combine frame 12. A stub shaft 172, having a conical portion 173 and a threaded end 174, is screwed into a receiving seat provided in the shaft 156 at one side thereof. A sprocket 176, which is fitted on the stub shaft 172, is incorporated in a drive train (not shown) of the combine harvester for driving the conveyor 40 at a speed of approximately 1 m/sec. As both lateral sides of the conveyor 40 are each others mirror image, except for what the drive arrangement 172, 176 is concerned, only the side thereof containing said drive arrangement 172, 176 has been shown in Figure 7.

The brackets 168 supporting the upper shaft 156 are slidably received by the brackets 170 enabling the conveyor 40 to be pivoted as a unitary structure around the coincident axis of the shaft 156 between an operative, material receiving position and an inoperative, retracted position, respectively shown in full and phantom lines in Figure 6. To ease the foregoing pivoting manoeuvre on the part of the combine operator, a screw jack 178 or any other type of suitable actuator is interconnected between a rigid transverse beam 180 of the combine frame 12, located at the back side of the conveyor 40, and an anchoring point proximate to the lowermost part of the conveyor housing 142; the screw jack 178 being operable to change the relative position of said housing 142 by being retracted or extended from an easy accessible location at the side of the combine harvester 10. Although additional locking means for securing the housing 142 in one of its extreme positions are not really required since the screw jack 178 can be blocked in any desired position, they nevertheless may be provided to further improve safety. For pivoting the housing 142 back and forth between operative and inoperative positions, it is unnecessary to disconnect the drive to the conveyor 40 therefrom as the housing 142 is pivoted around the axis of the drive shaft 156.

It will be appreciated from Figure 7 that the combine frame 12 transversely extends beyond the conveyor housing 142 and hence encloses the latter. Provided that the drive shaft 156 is deprived from its drive arrangement 172, 176, the conveyor 40 can be slid into the combine frame 12 as a unit, whereafter the brackets 170 are partially inserted through apertures in said frame 12 for receiving the brackets 168 and hence supporting the complete conveyor 40. Once the conveyor 40 in place, the stub shaft 172, carrying the sprocket 176, is screwed into the shaft 156 for drivingly connecting the latter to a drive arrangement of the combine harvester, as already mentioned. Care is taken that the sense of rotation for mounting the stub shaft 172 into the shaft 156 on the one hand and the normal sense of rotation of the conveyor 40 on the other hand are identical, in order to prevent that the stub shaft 172 would get unscrewed during operation of the conveyor 40.

Flexible strips (not shown) seal off any eventual apertures which may exist between the lateral sides of the conveyor housing 142, when in the grain receiving position, and the inner lateral sides of the combine frame 12, the foregoing to avoid any loss of grain therethrough during harvesting operation. The upper transverse end of the housings front wall 146 engages a sealing strip 182 attached to a slanting plate 183 fixed to the traction beam 184 of the harvester 10. Inspection cover means, in the form of an inspection door 186, are pivotally attached at 187 to the traction beam 184; said door 186, when in a closed position, extending in alignment with the plate 183 towards the lowermost edge of the stone trap 116 and held in that position by latch means which are not shown.

At the discharge end 188 of the conveyor 40, a reception plate 90 is operable to guide grain and chaff material issuing from said conveyor 40 towards the cleaning apparatus 42, comprising a.o. a conventional corrugated grain pan 192 and conventional sieves 44. The complete cleaning apparatus 42 is supported by a generally rectangular sub frame 194 which is pivotally mounted at its forward and rearward ends (only the forward end 195 being indicated) on the frame 12 of the combine harvester 10. When crop is being harvested on transversely inclined ground, position control means (not shown) are operable to automatically pivot the sub frame 194 so as to maintain the cleaning apparatus 42 horizontal, as seen in a transverse direction. For more details on this self-levelling cleaning apparatus, reference is made to GB-B-2.052.238.

As best can be observed in Figure 6, the overall configuration of the threshing and separating means 26, the cleaning apparatus 42 and the intermediate conveyor 40 displays the following peculiar features. As a result of the fact that the inlet gap 62 of the concave means 32 is located proximate to the horizontal median plane of the threshing cylinder 38, harvested crop material has to be fed in from an upward location. Taking account of route regulations which prescribe the maximum overall dimensions of mobile machinery using public roads and considering further that the grain tank 48 is mainly positioned above the threshing means 26, the foregoing way of feeding crop material to the cylinder 38 results in a configuration whereby the latter is mounted considerably lower in the combine frame 12 when compared to conventional combine harvesters, in which the layer of crop is fed to the thresher drum in a nearly horizontal direction. All this implies that grain and chaff material separated through the concave means 32 has to be collected at a rather low level before conveying it rearwardly to the cleaning mechanism.

Considering said cleaning mechanism 42, it already has been explained that the cleaning mechanism as a unitary structure is pivotable around a fore-and-aft extending axis for permitting said structure to be pivoted to a substantially horizontal position, when the combine harvester is transversely inclined relative to the vertical. It readily will be appreciated that during pivotal movement of the cleaning mechanism 42 from a non-pivoted position to an extreme pivoted position, the longitudinally extending sides of said cleaning mechanism 42 travel a considerable distance along the interior of the combine frame 12, demanding ample free space above the cleaning mechanism for allowing unobstructed swivelling thereof. This also implies that the stationary discharge end 188 of the conveyor 40 has to surmount the grain receiving front of the grain pan 192 considerably in order to avoid interference therebetween when operating on steep side hills and to ensure that no part of the grain pan front, irrespective of its relative position, may surmount said discharge end 188.

Concluding from the foregoing, separated grain and chaff material has to be conveyed from a level lower than conventional on the one hand to a level higher than conventional on the other hand. This problem has been solved by the configuration of Figure 6 in which the threshing cylinder 28 with its cooperating concaves 94 and 96 are disposed at least in part in a kind of transversely extending V-shaped trough 196, which is defined at its front side by the stone trap 116, the inspection door 186 and the slanting plate 183 and at its rear side by the conveyor 40. The slanting front side of the trough 196 is operable to direct any separated material which falls thereon towards the lowermost material receiving end of the conveyor 40, which transfers this material, together with material directly received from the concaves 94 and 96, upwardly and rearwardly towards the front of the cleaning mechanism 42.

The interior of the trough 196 and hence the threshing and separating means 26, in particular the threshing cylinder 28 and the concave means 32, and also the grain transporting side of the conveyor 40, are readily accessible for servicing from different sides of the trough 196 by means already referred to above. Indeed, by pivoting the conveyor 40 towards its retracted position abutting thereby the transverse frame beam 180, the rearward side of the trough is partially opened at its lowermost end, creating an aperture between the slanting plate 183 at the back side of the traction beam 184 and the lower part of the conveyor 40. The semicircular extending concaves 94 and 96 thereby become readily accessible in a generally vertical, upward direction. The lower part of the threshing cylinder 28 can be inspected through the meshes of the concaves 94 and 96 or may be reached for eventual repair by removing said concaves 94,96.

Access to the interior of the trough 196 further may be enabled by pivoting the inspection door 186 in the front side thereof to an open position, as indicated in phantom in Figure 6, whereby the traction beam 184 serves as an abutment for said door 186 so that the latter is maintained in a horizontal position, forming a kind of working platform for the operator on which tools can be stored near at hand. Alternatively, the inspection door 186 detachably may be connected to the traction beam 184 enabling the complete removal thereof.

Access to the threshing means 26 thus also can be gained from between the traction beam 184 and the feeder house 15, preferably with the latter in its raised, inoperative position. Accessibility through the front side of the trough is still further improved by removing the stone trap 116, what simply can be done by unlatching the latch member 136 and extracting the keys 132 from the stone trap supporting brackets 129. In a preferred embodiment, the crop detaining element 82 is also detachably supported by the combine frame 12 so that after removal of said element 82 also the discharge end of the crop elevator 24 and the deflector beater 38 easily can be reached.

Alternative embodiments of the stone trap 116 and the inspection door 186 are shown in Figure 8. In this arrangement, the inspection door 186 does not stop short of the bottom edge of the stone trap 116, but comprises an extended plate 197 therebehind which engages an upper surface of the transition beam 104. Well considered, the plate 197 effectively substitutes the bottom wall 122, 124 of the stone trap 116 as depicted in Figure 4. The alternative stone trap 116 therefore only needs a simplified structure comprising in essence the side walls 127 and the front plate 118, which has been enveloped around and fixedly attached to the pivot shaft 128.

The arrangement of Figure 8 provides several advantages. When the stone trap front plate 118 is pivoted to a stone dumping position, the plate 197 remains in its engaged position with the transition beam 104, as such preventing that stones or other foreign objects could fall into the gap between the stone trap pivot shaft 128 and said beam 104 and thus would get mixed with separated grain on the grain conveyor 40. The inspection door 186 in its alternative form does not require latch means for securing it in a closed position as the transverse bottom edge of the stone trap 116 prevents the door 186 from opening. On the one hand, this could be seen as a disadvantage as for enabling opening the door 186, the stone trap 116 first has to be removed. On the other hand however, the stone trap 116 is relatively light, and thus removal thereof is easily and rapidly accomplished, whereafter the door 186 falls open automatically. Accordingly, by unlatching only one element, being the stone trap 116, a full access through the front side of the trough 196 is obtained.

It thus readily will be appreciated that the threshing and separating means 26, in particular the deflector beater 38, the concaves 94,96 and the threshing cylinder 28 are easily accessible thanks to the partial incorporation of these elements in the trough 196 of which as well the front side as the rear side can be opened and/or removed. All this further implies that the threshing means become accessible from different sides at the same time. Consequently, when the nature of eventual servicing or repair would require the combined effort of several people, the trough 196 may be opened at both transverse sides so that those people simultaneously can gain access into the trough 196 from different sides allowing them to help each other.

## Claims

1. A combine harvester (10) comprising threshing and separating means (26) disposed at least in part in trough means (196) arranged to receive threshed and separated crop material from the threshing and separating means (26) and having a forwardly facing wall partly defined by a stone trap (116) disposed in front of the threshing and separating means (26),
characterised in that part of said forwardly facing wall is further defined by inspection cover means (186) enabling access to the threshing and separating means (26) through said trough means (196).

2. A combine harvester according to claim 1 and further also comprising conveyor means (24) in operative communication with the threshing and separating means (26) for supplying harvested crop material thereto and having a discharge end (60) at or proximate to the upper end of said trough means (196); said combine harvester (10) being characterised in that the inspection cover means (186) are formed by pivotable and/or removable door means (186) incorporated in the trough means (196) generally at the side thereof adjacent to the conveyor means (24); the arrangement being such that, when the inspection door means (186) are removed, respectively pivoted to a retracted position, the threshing and separating means (26) are accessible from underneath said conveyor means (24).

3. A combine harvester according to claim 2 characterised in that the conveyor means (24) comprise a crop elevator housing (15) which, at a location proximate to the threshing and separating means (26) and generally above said inspection cover means (186), is mounted for pivotal movement between a lowered operative position and a raised inoperative position; the arrangement being such that said access to the threshing and separating means (26) is facilitated when the crop elevator housing (15) is in its raised, inoperative position.

4. A combine harvester according to any of the preceding claims characterized in that the trough means (196) extend transversely of the machine at a location generally rearwardly of a front transverse traction beam (184) thereof.

5. A combine harvester according to claim 4 characterized in that the inspection door means (186) extends the full transverse width of the trough means (196) and comprises a transversely oriented pivot shaft (187) at or proximate to the traction beam (184); the arrangement being such that upon pivoting said door means (186) towards an open position, said beam (184) acts as an abutment for maintaining the door means (186) in a generally horizontal position.

6. A combine harvester according to any of the preceding claims characterized in that the trough means (196) are generally V-shaped as seen in cross section and comprise :
- said forwardly facing wall defined by, in combination with each other, said stone trap (116), said inspection cover means (186) and a stationary plate (183) in alignment therewith, and
- a rearwardly facing wall defined by a conveyor (40), operable to collect and transport separated crop material towards a cleaning mechanism (42).

7. A combine harvester according to claim 6 characterized in that the stone trap (116) is pivotable between a stone-collecting and a stone dumping-position and is removably attached to the machine; the arrangement being such that the inspection cover means (186), which extends towards and stops short of a lower edge of the stone trap (116), is pivotable towards an open position when the stone trap (116) is either removed from the combine harvester (10) or is disposed in its stone-collecting position.

8. A combine harvester according to claim 6 characterized in that the inspection cover means (186) extends towards and beyond a lower edge of the stone trap (116); the arrangement being such that said inspection means (186) are retained in a closed position by intermediary of said stone trap (116) and can only be moved towards an open position after removal of the stone trap (116) from the machine.

9. A combine harvester according to claim 8 characterized in that an upper portion (197) of the inspection cover means (186) bridges the spacing between said lower edge of the stone trap (116) and an inlet member (104) of a concave (32) cooperating with the threshing and separating means (26); said upper portion (197) thereby forming a floor member (197) along which stones and other foreign objects are guided towards the stone trap (116).

10. A combine harvester according to any of the claims 7 to 9 characterized in that the threshing and separating mechanism (26) comprises :
- a rotatable threshing drum (28);
- concave means (32), cooperating with said threshing drum (28) and extending therearound over an arc of at least 100°; and
- a deflector beater (38), interposed between the threshing drum (28) and the conveyor means (24); the arrangement being such that the deflector beater (38) is accessible from underneath after removal of the stone trap (116) from its stone-collecting position.

## Patentansprüche

1. Mähdrescher (10) mit Dresch- und Trenneinrichtungen (26), die zumindestens teilweise in Wanneneinrichtungen (196) angeordnet sind, die zur Aufnahme von gedroschenem und abgetrenntem Erntematerial von den Dresch- und Trenneinrichtungen (26) angeordnet sind und eine vorwärtsgerichtete Wand aufweisen, die teilweise durch eine Steinfalle (116) gebildet ist, die vor den Dresch- und Trenneinrichtungen angeordnet ist, dadurch gekennzeichnet, daß ein Teil der vorwärtsgerichteten Wand weiterhin durch Inspektionsklappeneinrichtungen (196) gebildet ist, die einen Zugang an die Dresch- und Trenneinrichtungen (26) durch die Wanneneinrichtungen (196) ermöglichen.

2. Mähdrescher nach Anspruch 1,
der weiterhin Fördereinrichtungen (24) umfaßt, die in betriebsmäßiger Verbindung mit den Dresch- und Trenneinrichtungen (96) stehen, um diesen geerntetes Erntematerial zuzuführen, und die ein Austrittsende (60) an dem oberen Ende der Wanneneinrichtungen (196) oder nahe an diesem oberen Ende aufweisen, wobei der Mähdrescher (10) dadurch gekennzeichnet ist, daß die Inspektionsklappeneinrichtungen (196) durch verschwenkbare und/oder entfernbare Klappenteile (186) gebildet sind, die in die Wanneneinrichtungen (196) allgemein an deren der Fördereinrichtung (24) benachbarten Seite eingefügt sind, wobei die Anordnung derart ist, daß, wenn die Inspektionsklappeneinrichtungen (186) entfernt bzw. in eine zurückgezogene Stellung verschwenkt sind, die Dresch- und Trenneinrichtungen (26) von der Unterseite der Fördereinrichtungen (24) aus zugänglich sind.

3. Mähdrescher nach Anspruch 2,
dadurch gekennzeichnet, daß die Fördereinrichtungen ein Erntematerial-SchrägfördergehäuSe (15) umfassen, das an einer Stelle benachbart zu den Dresch- und Trenneinrichtungen (26) und allgemein oberhalb der Inspektionsklappeneinrichtungen (186) für eine Schwenkbewegung zwischen einer abgesenkten Betriebsstellung und einer angehobenen unwirksamen Stellung befestigt ist, wobei die Anordnung derart ist, daß der Zugang an die Dresch- und Trenneinrichtungen (26) erleichtert ist, wenn sich das Erntematerial-SchrägförderergehäuSe (15) in seiner angehobenen unwirksamen Stellung befindet.

4. Mähdrescher nach einem der vorhergehenden Ansprüche, dadurch gekennzeichnet, daß sich die Wanneneinrichtungen (196) in Querrichtung der Maschine an einer Stelle allgemein rückwärts von einem vorderen querverlaufenden Zugträger (186) der Maschine erstrecken.

5. Mähdrescher nach Anspruch 4,
dadurch gekennzeichnet, daß sich die Inspektionsklappeneinrichtung (186) über die volle Querbreite der Wanneneinrichtungen (196) erstreckt und eine in Querrichtung ausgerichtete Schwenkwelle (187) an oder in der Nähe des Zugträgers (184) aufweist, wobei die Anordnung derart ist, daß beim Verschwenken der Klappeneinrichtung (186) in eine offene Stellung der Träger (184) als Anschlag wirkt, um die Klappeneinrichtung (186) in einer allgemein horizontalen Stellung zu halten.

6. Mähdrescher nach einem der vorhergehenden Ansprüche, dadurch gekennzeichnet, daß die Wanneneinrichtungen (196) bei Betrachtung im Querschnitt allgemein V-förmig sind und folgende Teile umfassen:
- die vorwärtsgerichtete Wand, die in Kombination miteinander durch die Steinfalle (116), die Inspektionsklappeneinrichtung (186) und eine hiermit ausgerichtete stationäre Platte (183) gebildet ist, und
- eine rückwärtsgerichtete Wand, die durch einen Förderer (40) gebildet ist, der betreibbar ist, um abgetrenntes Erntematerial zu sammeln und es in Richtung auf einen Reinigungsmechanismus (42) zu transportieren.

7. Mähdrescher nach Anspruch 6,
dadurch gekennzeichnet, daß die Steinfalle (116) zwischen einer Steinsammel- und einer Steinauswurfstellung verschwenkbar und entfernbar an der Maschine befestigt ist, wobei die Anordnung derart ist, daß die Inspektionsklappeneinrichtung (186), die sich in Richtung auf eine Unterkante der Steinfalle (116) erstreckt und kurz vor dieser Unterkante endet, in Richtung auf eine offene Stellung schwenkbar ist, wenn die Steinfalle (116) entweder von dem Mähdrescher (110) entfernt ist oder sich in ihrer Steinsammelstellung befindet.

8. Mähdrescher nach Anspruch 6,
dadurch gekennzeichnet, daß sich die Inspektionsklappeneinrichtung (186) in Richtung auf eine Unterkante der Steinfalle (116) und über diese Unterkante hinaus erstreckt, wobei die Anordnung derart ist, daß die Inspektionsklappeneinrichtung (186) mit Hilfe der Steinfalle (116) in einer geschlossenen Stellung gehalten wird und lediglich nach der Entfernung der Steinfalle (116) von der Maschine in eine offene Stellung bewegt werden kann.

9. Mähdrescher nach Anspruch 8,
dadurch gekennzeichnet, daß ein oberer Abschnitt (197) der Inspektionsklappeneinrichtung (186) den Abstand zwischen der Unterkante der Steinfalle (116) und einem Einlaßteil (104) eines Dreschkorbes (32) überbrückt, der mit den Dresch- und Trenneinrichtungen (26) zusammenwirkt, wobei der obere Abschnitt (197) auf diese Weise einen Bodenteil (197) bildet, entlang dessen Steine und andere Fremdkörper in Richtung auf die Steinfalle (116) geführt werden.

10. Mähdrescher nach einem der Ansprüche 7 bis 9, dadurch gekennzeichnet, daß der Dresch- und Trennmechanismus (26) folgende Teile umfaßt:
- eine in Drehung versetzbare Dreschtrommel (28),
- Dreschkorbeinrichtungen (32), die mit der Dreschtrommel (28) zusammenwirken und sich um diese herum über einen Bogen von zumindestens 100° erstrecken, und
- eine Ablenk-Strohleittrommel (38), die zwischen der Dreschtrommel (28) und den Fördereinrichtungen (24) angeordnet ist, wobei die Anordnung derart ist, daß die Ablenk-Strohleittrommel (38) von der Unterseite aus nach der Entfernung der Steinfalle (116) aus ihrer Steinsammelstellung zugänglich ist.

## Revendications

1. Moissonneuse-batteuse (10) comprenant des moyens de battage et de séparation (26) disposés au moins en partie dans un système d'auge (196) agencé pour recevoir le matériau de récolte battu et séparé qui provient des moyens de battage et de séparation (26), et ayant une paroi orientée vers l'avant définie par un épierreur (116) disposé frontalement par rapport aux moyens de battage et de séparation (26), caractérisée en ce qu'une partie de ladite paroi orientée vers l'avant est de plus définie par un système de couvercle d'inspection (186) permettant d'accéder aux moyens de battage et de séparation (26) au travers dudit système d'auge (196).

2. Moissonneuse-batteuse selon la revendication 1 et comprenant également un moyen de transport (24) en communication fonctionnelle avec des moyens de battage et de séparation (26) pour leur alimentation en matériau de récolte et ayant une extrémité de déchargement (60) au niveau, ou proche de l'extrémité supérieure dudit système d'auge (196); ladite moissonneuse-batteuse (10) étant caractérisée en ce que le système de couvercle d'inspection (186) est constitué d'un système de porte (186) pivotante et/ou amovible intégré dans le système d'auge (196) généralement placé à coté du moyen de transport (24); la disposition étant telle que, lorsque le système de porte d'inspection (24) est enlevé ou respectivement pivoté dans une position rétractée, les moyens de battage et de séparation (26) soient accessibles par dessous ledit moyen de transport (24).

3. Moissonneuse-batteuse selon la revendication 2 caractérisée en ce que le moyen de transport (24) comprend un logement d'élévateur de matériau de récolte (15) qui, à proximité des moyens de battage et de séparation (26) et généralement au-dessus dudit système de porte d'inspection, est pourvu d'un montage permettant un mouvement de pivotement entre une position basse de fonctionnement et une position relevée hors fonctionnement; la disposition étant telle que ce dit accès aux moyens de battage et de séparation (26) est facilité lorsque le logement de l'élévateur de matériau de récolte (15) est en position relevée, hors fonctionnement.

4. Moissonneuse-batteuse selon l'une quelconque des revendications précédentes, caractérisée en ce que le système d'auge (196) s'étend transversalement à la machine et est placé généralement à l'arrière d'une barre de traction (184) de la machine.

5. Moissonneuse-batteuse selon la revendication 4 caractérisée en ce que le système de porte d'inspection (186) se prolonge sur toute la largeur transversale du système d'auge (196) et comprend un axe de pivotement (187) orienté transversalement au niveau ou à proximité de la barre de traction (184); la disposition étant telle, qu'en pivotant ledit système de porte (186) vers sa position ouverte, ladite barre (184) serve de butée pour le maintien du système de porte (186) dans une position généralement horizontale.

6. Moissonneuse-batteuse selon l'une quelconque des revendications précédentes, caractérisée en ce que le système d'auge (196), vu en section transversale, est en général en forme de V et comprend:
- ladite paroi orientée vers l'avant, définie par, en association entre eux, ledit épierreur (116), ledit système de couvercle d'inspection (186) et une tôle fixe (183) en alignement mutuel, et
- une paroi orientée vers l'arrière, définie par un transporteur (40), destiné à collecter et à transporter le matériau de récolte séparé vers un mécanisme de nettoyage (42).

7. Moissonneuse-batteuse selon la revendication 6 caractérisée en ce que l'épierreur (116) est pivotante entre une position de collecte de pierres et une position de déversement de pierres et est monté de manière amovible sur la machine; la disposition étant telle que le système de couvercle d'inspection (186), qui se trouve dans le prolongement et se termine à proximité du bord inférieur de l'épierreur (116), peut être pivoté dans une position ouverte lorsque l'épierreur (116) est, soit enlevé de la moissonneuse-batteuse (10), soit positionné dans sa position de collecte de pierres.

8. Moissonneuse-batteuse selon la revendication 6 caractérisée en ce que le système de couvercle d'inspection (186) est dans le prolongement et s'étend au delà du bord inférieur de l'épierreur (116); la disposition étant telle que ce dit système d'inspection (186) soit maintenu en position fermée par l'intermédiaire dudit épierreur (116) et puisse seulement être ouvert après avoir enlevé l'épierreur (116) de la machine.

9. Moissonneuse-batteuse selon la revendication 8 caractérisée en ce qu'une partie supérieure (197) du système de couvercle d'inspection (186) recouvre l'espace entre ledit bord inférieur de l'épierreur (116) et un élément d'introduction (104) du contre-batteur (32) faisant partie des moyens de battage et de séparation (26); ladite partie supérieure (197) constituant ainsi un élément de base (197) sur lequel des pierres et d'autres objets étrangers sont guidés vers l'épierreur (116).

10. Moissonneuse-batteuse selon l'une quelconque des revendications 7 à 9 caractérisée en ce que le mécanisme de battage et de séparation (26) comprend:
- un tambour rotatif de battage (28);
- un système de contre-batteur (32), associé au dit tambour de battage (28) et s'étendant autour de celui-ci sur un arc d'au moins 100°; et
- un batteur-déflecteur (38), interposé entre le tambour de battage (28) et le système de transporteur (24); la disposition étant telle que le batteur-déflecteur (38) soit accessible par dessous après avoir enlevé l'épierreur (116) de sa position de collecte de pierres.
